# FASCICULE DE BREVET EUROPEEN

(11) **EP 3 700 780 B1**
(45) Date de publication et mention de la délivrance du brevet: **16.06.2021**
(21) Numéro de dépôt: 18799575.8
(22) Date de dépôt: 03.10.2018
(51) Int. Cl.: B60Q 1/14, B60R 1/00

(54) **SYSTÈME DE RÉTROVISION VIDÉO PERFECTIONNÉ POUR VÉHICULE AUTOMOBILE**
VERBESSERTES RÜCKBLICK-VIDEOSYSTEM FÜR EIN KRAFTFAHRZEUG
IMPROVED REAR-VIEW VIDEO SYSTEM FOR A MOTOR VEHICLE

(30) Priorité: 24.10.2017 FR 1760021
(43) Date de publication de la demande: 02.09.2020
(73) Titulaire: PSA Automobiles SA, 78300 Poissy (FR)
(72) Inventeur: BAYARD, Loic, 91940 Les Ulis (FR); MOREAU, Charles, 28300 Leves (FR); MAUDEMAIN, Aurelien, 91180 St Germain Les Arpajon (FR)
(86) Numéro de dépôt international: PCT/FR2018/052432
(87) Numéro de publication internationale: WO 2019/081828

(56) Documents cités:
- EP-A1- 1 705 623
- DE-A1-102010 020 201
- DE-A1-102015 001 359
- JP-A- S62 122 487
- JP-A- 2005 170 281
- JP-A- 2009 117 971
- JP-A- 2012 006 551
- JP-U- S6 082 885
- KR-B1- 100 979 881
- US-A1- 2017 111 587

## Description

### Domaine de l'invention

La présente invention se rapporte à la problématique de la visibilité de l'environnement arrière d'un véhicule automobile.

### Arrière-plan de l'invention

La visibilité de l'environnement arrière d'un véhicule automobile est classiquement assurée par le rétroviseur intérieur central et les deux rétroviseurs latéraux extérieurs. Ces derniers permettent notamment d'assister le conducteur lors de certaines manœuvres telles que le changement de voie de circulation, l'insertion dans le trafic ou le roulage en marche arrière.

Le champ de couverture de ces rétroviseurs est toutefois limité et certaines zones dénommées communément « angles morts » demeurent inaccessibles.

Avant de réaliser une telle manœuvre en toute sécurité, le conducteur est donc amené à tourner sa tête afin de s'assurer qu'aucun obstacle ne se trouve dans l'un de ces angles morts.

Ce mouvement rend plus difficile le maintien de la direction du véhicule et a donc tendance à engendrer un stress supplémentaire pour le conducteur.

Par ailleurs, certains véhicules de type utilitaire sont dépourvus de portions vitrées en partie arrière et ne permettent donc pas à leurs conducteurs de visualiser ces angles morts en tournant la tête.

Afin de les réduire voire de les supprimer, plusieurs solutions ont été développées.

Une première solution connue consiste à ajouter un miroir convexe ou à prévoir une portion asphérique sur au moins l'un des rétroviseurs extérieurs latéraux pour élargir le champ de vision latéral du conducteur et diminuer l'angle mort du côté correspondant.

Toutefois, ce type de miroir engendre des distorsions optiques et une réduction de la taille de l'image restituée qui peuvent entrainer une estimation erronée par le conducteur de la taille, de la vitesse et de distance des obstacles visualisés.

Ces dernières années ont vu l'apparition de systèmes de rétrovision vidéo comportant au moins une caméra de vision latérale montée sur le flanc latéral passager du véhicule et apte à capturer une vue de l'environnement latéral arrière côté passager du véhicule, ainsi qu'un moniteur implanté dans l'habitacle et couplé à cette caméra de sorte à afficher la vue capturée par cette dernière.

Ces systèmes de rétrovision vidéo permettent d'améliorer considérablement le champ de vision latéral du conducteur et de réduire très sensiblement l'angle mort du côté correspondant.

Cependant, l'affichage en continu de la vue capturée par cette caméra dans l'habitacle du véhicule a tendance à constituer une source de distraction pour le conducteur qui s'avère nuisible à la sécurité.

Afin de palier à cet inconvénient, il est connu de prévoir à proximité du moniteur un bouton permettant au conducteur d'activer ou de désactiver l'affichage, mais une telle manipulation oblige le conducteur à quitter brièvement la route des yeux ce qui peut s'avérer dangereux.

La demande de brevet KR 10-0979881 divulgue un système de rétrovision vidéo comportant deux caméras de vision latérale montées sur les deux flancs latéraux extérieurs du véhicule et aptes à capturer respectivement une vue de l'environnement latéral arrière côté passager et côté conducteur, ainsi qu'un moniteur implanté dans l'habitacle et relié à ces deux caméras.

Ce système de rétrovision est configuré de sorte que :
- le moniteur soit automatiquement allumé et affiche la vue capturée par la caméra de vision latérale côté passager lorsque le levier de commande des indicateurs lumineux de direction du véhicule est amené dans sa position d'actionnement des indicateurs lumineux de changement de direction côté passager ; et que
- le moniteur soit automatiquement allumé et affiche la vue capturée par la caméra de vision latérale côté conducteur lorsque le levier de commande des indicateurs lumineux de direction du véhicule est amené dans sa position d'actionnement des indicateurs lumineux de changement de direction côté conducteur.

Ce système permet, lors d'un changement de voie de circulation ou en cas d'insertion dans le trafic, d'améliorer le champ de vision arrière du conducteur du côté latéral adéquat sans que ce dernier n'ait à effectuer de manipulation supplémentaire.

Un tel système ne permet toutefois pas de supprimer totalement les angles morts, en particulier pour les véhicules utilitaires dont la ou les portes de coffre sont dépourvues de parties vitrées transparentes et dont le rétroviseur intérieur n'apporte aucune assistance au conducteur.

On connait par le document JP2009117971 un appareil de surveillance de la périphérie d'un véhicule correspondant au préambule de la revendication 1. On connait aussi par le document US20170111587 des techniques de mise en œuvre d'un système d'affichage de caméra avec activation sélective d'une ou plusieurs unités de caméra auxiliaires associées par un dispositif de navigation en communication sans fil avec les unités de caméra auxiliaires. On connait aussi par le document JP S62122487 un véhicule muni d'une caméra arrière. On connait aussi par le document DE 102010020201 un procédé d'affichage d'une image d'un véhicule automobile comportant une caméra arrière. On connait aussi par le document JPS6082885 un système de rétrovision numérique. On connait par le document JP 2012006551 un appareil de surveillance de la périphérie d'un véhicule, qui montre clairement à partir de quelle caméra une image est affichée avec une configuration simple sans être affectée par une caractéristique d'un objectif d'une caméra et la forme d'une carrosserie de voiture.

### Obiet et résumé de l'invention

La présente invention vise à améliorer la situation.

Elle propose à cet effet un système de rétrovision vidéo pour véhicule automobile comportant les caractéristiques de la revendication 1.

Le système de rétrovision selon l'invention permet ainsi au conducteur lors de certaines manœuvres et notamment en cas de changement de voie de circulation, d'avoir une vision globale de l'environnement arrière et latéral côté passager du véhicule en balayant les différentes vues capturées par les caméras via une manipulation particulièrement simple et accessible ne l'obligeant pas à quitter son regard de la route du véhicule.

Selon des caractéristiques préférées, prises seules ou en combinaison :
- ledit système comporte une unique caméra de vision arrière montée mobile à pivotement entre une première position de vision de recul dans laquelle elle est apte à capturer une vue de l'environnement arrière proche dudit véhicule, et une seconde position de surveillance arrière où elle est apte à capturer une vue de l'environnement arrière plus lointain dudit véhicule ;
- ledit système comporte deux caméras de vision arrière distinctes et aptes à capturer respectivement une vue de l'environnement arrière proche dudit véhicule et une vue de l'environnement arrière plus lointain dudit véhicule ;
- ledit moniteur est relié au levier de commande de boîte de vitesse dudit véhicule, ledit système étant configuré de sorte que ledit moniteur soit automatiquement allumé et affiche la vue de l'environnement arrière proche dudit véhicule lorsque ce levier de commande de boîte de vitesse est amené en position de marche arrière ;
- ledit système est également configuré de sorte que ledit moniteur soit automatiquement éteint lorsque ledit levier de commande des indicateurs lumineux de direction dudit véhicule est amené en position neutre ou en position d'actionnement des indicateurs lumineux de changement de direction côté conducteur ;
- ledit système comporte en outre une caméra de vision latérale côté conducteur reliée audit moniteur et apte à capturer une vue de l'environnement latéral arrière côté conducteur dudit véhicule, ledit système étant configuré de sorte que ledit moniteur soit automatiquement allumé et affiche la vue capturée par ladite caméra de vision latérale côté conducteur lorsque le levier de commande des indicateurs lumineux de direction dudit véhicule est amené dans sa position d'actionnement des indicateurs lumineux de changement de direction côté conducteur, et que ledit moniteur soit automatiquement éteint lorsque ce même levier est amené en position neutre ;
- ledit système est configuré de sorte qu'un appui continu sur ledit bouton pendant une durée supérieure à une valeur seuil entraine automatiquement l'extinction dudit moniteur ;
- ladite valeur seuil est comprise entre 2 et 3 secondes ; et/ou
- ledit système comporte un module de traitement apte à appliquer certaines transformations aux vues capturées par lesdites caméras afin que ces dernières imitent l'apparence de réflexions issues de rétroviseurs optiques.

L'invention vise également sous un second aspect un véhicule automobile comportant un tel système de rétrovision vidéo.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 est une vue de dessus d'un véhicule utilitaire doté d'un système de rétrovision vidéo selon un mode préféré de réalisation de l'invention ;
- la figure 2 représente une vue de côté du véhicule de la figure 1 ;
- la figure 3 est un diagramme schématique fonctionnel du système de rétrovision vidéo selon l'invention ; et
- la figure 4 représente une vue simplifiée partielle de l'habitacle du véhicule automobile des figures 1 et 2.

### Description détaillée d'un mode de réalisation

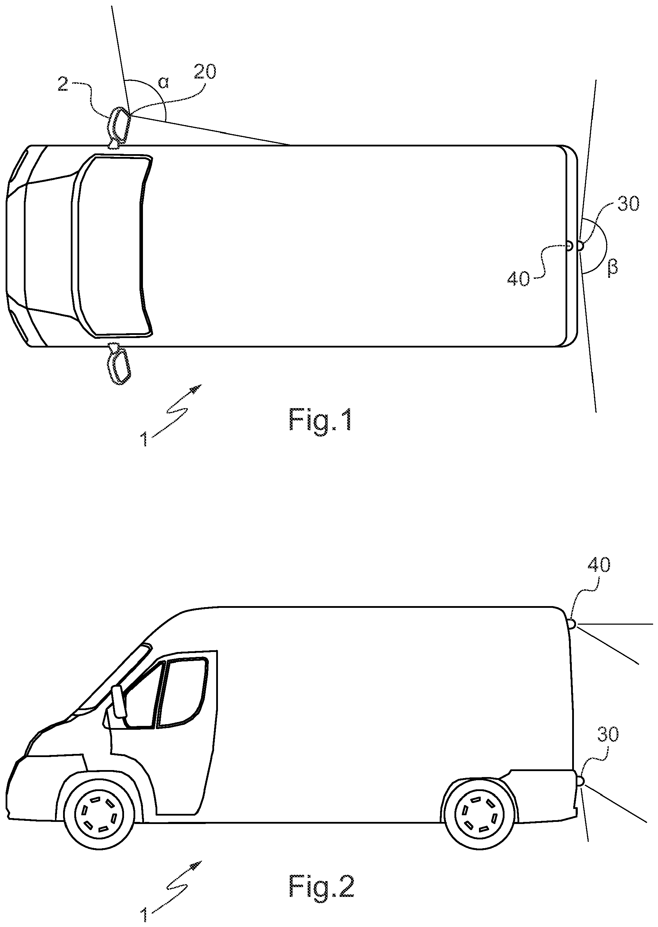

Les figures 1 et 2 montrent un véhicule automobile utilitaire 1 de type fourgon équipé d'un système de rétrovision vidéo 10 selon l'invention.

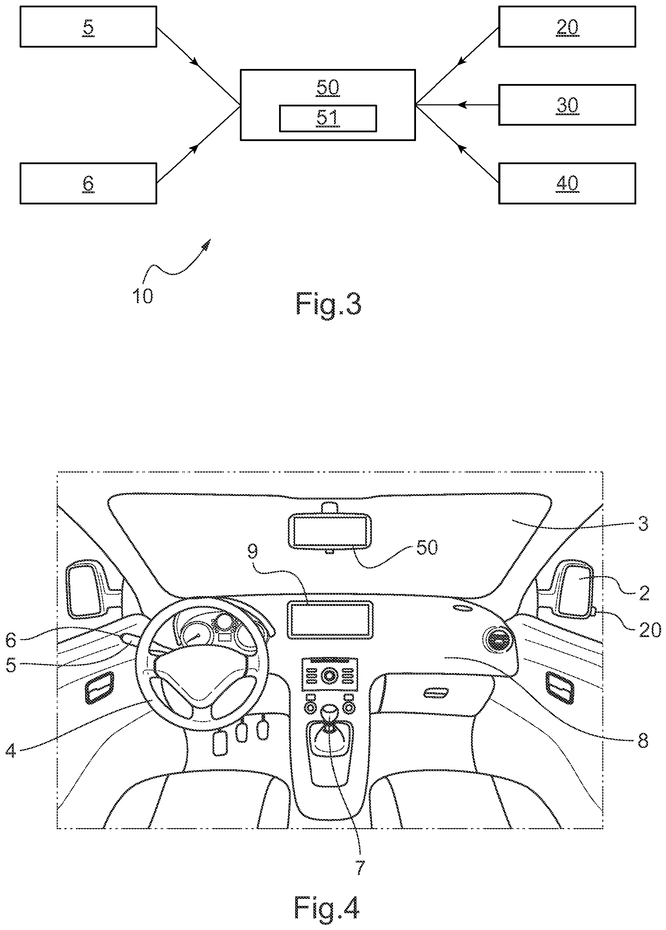

Tel qu'illustré par ces figures et le diagramme fonctionnel de la figure 3, ce système de rétrovision 10 comporte trois caméras vidéo 20, 30, 40 capturant chacune une portion de l'environnement extérieur du véhicule et étant couplées à un moniteur 50 implanté dans l'habitacle du véhicule.

Les cameras 20, 30, 40 sont avantageusement de type numérique (par exemple à capteur CCD) et dotées d'une fréquence de rafraîchissement suffisamment élevée pour assurer un excellent confort visuel au conducteur.

La première caméra 20 dite de vision latérale côté passager est montée sur le flanc latéral extérieur côté passager du véhicule 1 en étant avantageusement implantée dans la partie externe du boîtier du rétroviseur latéral correspondant 2.

Elle présente un axe principal orienté vers l'arrière et latéralement vers l'extérieur (par exemple selon un angle de 145° par rapport à la direction longitudinale d'avancement du véhicule 1) et un champ de vision horizontal α relativement large (avantageusement compris entre 90 et 120°) lui permettant de capturer une vue de l'environnement latéral arrière côté passager du véhicule 1 couvrant la zone latérale d'angle mort de ce même côté.

La deuxième caméra 30 dite de recul est quant à elle montée à l'extrémité inférieure arrière du châssis du véhicule 1 (par exemple juste au dessus de la plaque d'immatriculation) en étant implantée de préférence dans son plan longitudinal médian.

Elle présente un axe principal orienté vers l'arrière et vers le bas et un champ de vision horizontal β relativement large (avantageusement compris entre 150 et 180°) lui permettant de capturer une vue « grand angle » de l'environnement arrière proche du véhicule 1 de sorte à faciliter les manœuvres en marche arrière de ce dernier.

La troisième caméra 40 dite de surveillance arrière est montée à l'extrémité supérieure arrière du châssis du véhicule 1 en étant implantée de préférence dans son plan longitudinal médian 1.

Elle présente un axe principal orienté sensiblement horizontalement vers l'arrière en s'inclinant légèrement vers le bas de sorte à capturer une vue de l'environnement arrière plus lointain du véhicule 1 couvrant la zone arrière d'angle mort.

Le moniteur 50 est relié par l'intermédiaire de liaisons filaires ou sans fil aux trois cameras vidéo 20, 30, 40 de sorte à pouvoir afficher sur son écran les différentes vues capturées par ces dernières.

Tel qu'illustré sur la figure 4, le moniteur 50 est avantageusement disposé en partie supérieure centrale du pare-brise 3 en lieu et place d'un rétroviseur intérieur classique de type optique.

Ce moniteur 50 intègre un module de traitement 51 apte à appliquer certaines transformations aux vues capturées par les caméras 20, 30, 40 afin que ces dernières imitent l'apparence de réflexions issues de rétroviseurs optiques.

Le module de traitement 51 réalise notamment un redimensionnement des vues pour s'adapter à la variation de distance entre ces caméras et les objets filmés, ainsi qu'un retournement de ces mêmes vues autour de leur axe vertical médian de manière à inverser les côtés droits et gauche comme un miroir de rétroviseur.

Le moniteur 50 est relié au levier de commande des indicateurs lumineux de changement direction 5, implanté dans la colonne de direction du véhicule en avant du volant 4 (voir figure 3) et servant également en l'espèce de commutateur pour l'affichage sur ce moniteur 50 des différentes vues capturées par les caméras vidéo 20, 30, 40.

Le système de rétrovision vidéo 10 est configuré de sorte que :
- le moniteur 50 soit automatiquement allumé et affiche la vue de l'environnement latéral arrière côté passager capturée par la caméra 20 lorsque le levier de commande 5 est amené dans sa position d'actionnement des indicateurs lumineux de changement de direction côté passager ; et que
- ce moniteur 50 soit automatiquement éteint lorsque ce levier de commande 5 est amené en position neutre ou en position d'actionnement des indicateurs lumineux de changement de direction côté conducteur.

D'autre part, ce système de rétrovision est également configuré de sorte que, depuis la configuration allumée du moniteur 50, la réalisation d'appuis successifs sur un bouton poussoir 6 ménagé à l'extrémité de ce levier 5 entraine le changement de manière cyclique de vue s'affichant sur ce moniteur 50 parmi celles aptes à être capturées par les caméras 20, 30, 40.

Ainsi, depuis la vue de l'environnement latéral arrière côté passager capturée par la caméra 20 :
- un premier appui sur ce bouton 6 entraine l'affichage sur le moniteur 50 de la vue de l'environnement arrière proche du véhicule capturée par la caméra 30 ;
- un deuxième appui entraine l'affichage sur ce même moniteur 50 de la vue de l'environnement arrière plus lointain du véhicule capturée par la caméra 40 ; et
- un troisième appui entraine le retour de l'affichage sur le moniteur 50 de la vue de l'environnement latéral arrière côté passager capturée par la caméra 20.

De préférence, le moniteur 50 est en outre relié au levier de commande de boîte de vitesse 7 du véhicule 1, de sorte que l'enclenchement de la marche arrière entraine également l'allumage automatique de ce moniteur 50 et l'affichage de la vue de l'environnement arrière proche du véhicule capturé par la caméra 30.

On notera enfin, qu'en cas d'appui continu sur le bouton 6 pendant une durée supérieure à une valeur seuil comprise par exemple entre deux et trois secondes, le système de rétrovision 10 est configuré pour entrainer automatiquement l'extinction du moniteur 50.

Cette option permet aux conducteurs dont les yeux sont particulièrement sensibles aux fortes variations de luminosité, d'éviter la gêne visuelle pouvant être causée de nuit par l'affichage automatique de certaines vues capturées par des caméras vidéo 20, 30, 40 sur le moniteur 50.

Selon des variantes de réalisation non représentées, la camera de vision latérale côté passager 20 est implantée dans un boîtier ménagé sur l'aile avant correspondante du véhicule et logeant avantageusement un indicateur lumineux clignotant de changement de direction.

Selon d'autres variantes de réalisation non représentées, le système de rétrovision selon l'invention comporte une autre caméra de vision latérale montée sur le flanc latéral extérieur côté conducteur du véhicule et reliée au moniteur 50, cette caméra étant apte à capturer une vue de l'environnement latéral arrière côté conducteur du véhicule couvrant la zone latérale d'angle mort de ce même côté.

En présence d'une telle caméra supplémentaire, le système de rétrovision est configuré de sorte que le moniteur 50 soit automatiquement allumé et affiche la vue capturée par cette caméra de vision latérale côté conducteur lorsque le levier de commande 5 est amené dans sa position d'actionnement des indicateurs lumineux de changement de direction côté conducteur.

Selon encore d'autres variantes de réalisation non représentées, le système de rétrovision selon l'invention est dépourvu de caméra de recul spécifique telle que 30. Dans un tel cas de figure, on pourra prévoir que la caméra de vision arrière 30 soit montée mobile à pivotement entre une première position de vision de recul dans laquelle elle capture une vue de l'environnement arrière proche du véhicule, et une seconde position de surveillance arrière où elle capture une vue de l'environnement arrière plus lointain.

Selon encore d'autres variantes de réalisation non représentées, le système de rétrovision selon l'invention est dépourvu de caméra de recul spécifique telle que 30. Dans un tel cas de figure, on pourra prévoir que la caméra de vision arrière 30 soit montée fixe. L'unique caméra de vision arrière est apte à capturer une vue générale de l'environnement arrière dudit véhicule. Une première vue de l'environnement arrière proche dudit véhicule et une seconde vue de l'environnement arrière plus lointain dudit véhicule sont obtenues à partir de la vue générale de l'environnement arrière dudit véhicule, un traitement d'image étant appliqué pour l'obtention d'au moins une des vues. Le traitement est par exemple un recadrage appliqué à la vue générale.

Selon encore d'autres variantes de réalisation non représentées :
- le moniteur peut être constitué par l'écran 9 du dispositif d'info-divertissement du véhicule intégré dans la partie centrale du tableau de bord 8 ;
- le module de traitement 51 des images des cameras vidéo est implanté dans un module externe interposé entre ces dernières et le moniteur ; et/ou
- chaque camera vidéo intègre son propre module de traitement d'images.

Bien entendu, la présente invention ne se limite pas aux formes de réalisation décrites et représentées, mais elle englobe toute variante d'exécution à la portée de l'homme du métier.

## Revendications

1. Système de rétrovision vidéo pour véhicule automobile comportant une caméra de vision latérale côté passager (20) apte à capturer une vue de l'environnement latéral arrière côté passager dudit véhicule, ainsi qu'un moniteur (50) implanté dans l'habitacle dudit véhicule et relié à cette caméra (20), ledit système étant configuré de sorte que ledit moniteur (50) soit automatiquement allumé et affiche la vue capturée par ladite caméra de vision latérale côté passager (20) lorsque le levier de commande des indicateurs lumineux de direction (5) dudit véhicule est amené dans sa position d'actionnement des indicateurs lumineux de changement de direction côté passager;
comportant en outre au moins une caméra de vision arrière (30, 40) reliée également audit moniteur (50) et apte à capturer au moins une vue de l'environnement arrière dudit véhicule,
**caractérisé en ce que** ledit système est configuré de sorte que, depuis la configuration allumée dudit moniteur (50), la réalisation d'appuis successifs sur un bouton (6), ménagé à l'extrémité dudit levier (5), entraine le changement de manière cyclique de la vue s'affichant sur ledit moniteur (50) parmi celles aptes à être capturées par lesdites caméras (20, 30, 40).

2. Système de rétrovision vidéo selon la revendication 1, **caractérisé en ce qu'**il comporte une unique caméra de vision arrière montée mobile à pivotement entre une première position de vision de recul dans laquelle elle est apte à capturer une vue de l'environnement arrière proche dudit véhicule, et une seconde position de surveillance arrière où elle est apte à capturer une vue de l'environnement arrière plus lointain dudit véhicule.

3. Système de rétrovision vidéo selon la revendication 1, **caractérisé en ce qu'**il comporte une unique caméra de vision arrière apte à capturer une vue générale de l'environnement arrière dudit véhicule, une première vue de l'environnement arrière proche dudit véhicule et une seconde vue de l'environnement arrière plus lointain dudit véhicule étant obtenues à partir de la vue générale de l'environnement arrière dudit véhicule, un traitement d'image étant appliqué à la vue générale pour l'obtention d'au moins une des vues.

4. Système de rétrovision vidéo selon la revendication 1, **caractérisé en ce qu'**il comporte deux caméras de vision arrière distinctes (30, 40) et aptes à capturer respectivement une vue de l'environnement arrière proche dudit véhicule et une vue de l'environnement arrière plus lointain dudit véhicule.

5. Système de rétrovision vidéo selon l'une des revendications 2 ou 3, **caractérisé en ce que** ledit moniteur (50) est relié au levier de commande de boîte de vitesse (7) dudit véhicule, ledit système étant configuré de sorte que ledit moniteur (50) soit automatiquement allumé et affiche la vue de l'environnement arrière proche dudit véhicule lorsque ce levier de commande de boîte de vitesse (7) est amené en position de marche arrière.

6. Système de rétrovision vidéo selon l'une des revendications 1 à 4, **caractérisé en ce qu'**il est également configuré de sorte que ledit moniteur soit automatiquement éteint lorsque ledit levier de commande des indicateurs lumineux de direction (5) dudit véhicule est amené en position neutre ou en position d'actionnement des indicateurs lumineux de changement de direction côté conducteur.

7. Système de rétrovision vidéo selon l'une des revendications 1 à 5, **caractérisé en ce qu'**il comporte en outre une caméra de vision latérale côté conducteur reliée audit moniteur et apte à capturer une vue de l'environnement latéral arrière côté conducteur dudit véhicule, ledit système étant configuré de sorte que ledit moniteur soit automatiquement allumé et affiche la vue capturée par ladite caméra de vision latérale côté conducteur lorsque le levier de commande des indicateurs lumineux de direction dudit véhicule est amené dans sa position d'actionnement des indicateurs lumineux de changement de direction côté conducteur, et que ledit moniteur soit automatiquement éteint lorsque ce même levier est amené en position neutre.

8. Système de rétrovision vidéo selon l'une des revendications 1 à 6, **caractérisé en ce qu'**il est configuré de sorte qu'un appui continu sur ledit bouton (6) pendant une durée supérieure à une valeur seuil entraine automatiquement l'extinction dudit moniteur (50).

9. Système de rétrovision vidéo selon la revendication 8, **caractérisé en ce que** ladite valeur seuil est comprise entre 2 et 3 secondes.

10. Système de rétrovision vidéo selon l'une des revendications 1 à 9, **caractérisé en ce qu'**il comporte un module de traitement (51) apte à appliquer certaines transformations aux vues capturées par lesdites caméras (20, 30, 40) afin que ces dernières imitent l'apparence de réflexions issues de rétroviseurs optiques.

11. Véhicule automobile comportant un système de rétrovision vidéo selon l'une des revendications 1 à 10.

## Patentansprüche

1. Video-Rückblicksystem für ein Kraftfahrzeug mit einer Beifahrerseitenkamera (20), die in der Lage ist, eine Ansicht der hinteren beifahrerseitigen Umgebung des Fahrzeugs zu erfassen, und einem Monitor (50), der sich im Fahrgastraum des Fahrzeugs befindet und mit der Kamera (20) verbunden ist, wobei das System so konfiguriert ist, dass der Monitor (50) automatisch eingeschaltet wird und die von der Beifahrerseitenkamera (20) erfasste Ansicht anzeigt, wenn der Steuerhebel der Fahrtrichtungsanzeiger (5) eingeschaltet wird, wobei das System so konfiguriert ist, dass der Monitor (50) automatisch eingeschaltet wird und die von der beifahrerseitigen Sichtkamera (20) erfasste Ansicht anzeigt, wenn der Fahrtrichtungsanzeiger-Steuerhebel (5) des Fahrzeugs in seine beifahrerseitige Fahrtrichtungsanzeiger-Betriebsposition gebracht wird;
ferner mindestens eine Rückfahrkamera (30, 40) umfasst, die ebenfalls mit dem Monitor (50) verbunden ist und in der Lage ist, mindestens eine Ansicht der hinteren Umgebung des Fahrzeugs zu erfassen, **dadurch gekennzeichnet, dass** das System so konfiguriert ist, dass aus der eingeschalteten Konfiguration des Monitors (50) aufeinanderfolgende Drücke eines Knopfes (6), der am Ende des Hebels (5) vorgesehen ist, bewirken, dass die auf dem Monitor (50) angezeigte Ansicht zyklisch unter denen geändert wird, die von den Kameras (20, 30, 40) erfasst werden können.

2. Video-Rückfahrsystem nach Anspruch 1, **dadurch gekennzeichnet, dass** es eine einzelne Rückfahrkamera umfasst, die schwenkbar zwischen einer ersten Rückfahrposition, in der sie geeignet ist, eine Ansicht der nahen hinteren Umgebung des Fahrzeugs zu erfassen, und einer zweiten Rückfahrüberwachungsposition, in der sie geeignet ist, eine Ansicht der weiter entfernten hinteren Umgebung des Fahrzeugs zu erfassen, angebracht ist.

3. Video-Rückfahrsystem nach Anspruch 1, **dadurch gekennzeichnet, dass** es eine einzelne Rückfahrkamera umfasst, die so ausgelegt ist, dass sie eine allgemeine Ansicht der rückwärtigen Umgebung des Fahrzeugs erfasst, wobei eine erste Ansicht der nahen rückwärtigen Umgebung des Fahrzeugs und eine zweite Ansicht der weiter entfernten rückwärtigen Umgebung des Fahrzeugs aus der allgemeinen Ansicht der rückwärtigen Umgebung des Fahrzeugs erhalten wird, wobei die allgemeine Ansicht einer Bildverarbeitung unterzogen wird, um mindestens eine der Ansichten zu erhalten.

4. Video-Rückfahrsystem nach Anspruch 1, **dadurch gekennzeichnet, dass** es zwei getrennte Rückfahrkameras (30, 40) umfasst, die in der Lage sind, jeweils eine Ansicht der nahen hinteren Umgebung des Fahrzeugs und eine Ansicht der weiter entfernten hinteren Umgebung des Fahrzeugs zu erfassen.

5. Rückblick-Videosystem nach einem der Ansprüche 2 oder 3, **dadurch gekennzeichnet, dass** der Monitor (50) mit dem Getriebesteuerhebel (7) des Fahrzeugs verbunden ist, wobei das System so konfiguriert ist, dass der Monitor (50) automatisch eingeschaltet wird und die Ansicht der nahen hinteren Umgebung des Fahrzeugs anzeigt, wenn der Getriebesteuerhebel (7) in die Rückwärtsposition bewegt wird.

6. Video-Rückfahrsystem nach einem der Ansprüche 1 bis 4, **dadurch gekennzeichnet, dass** es außerdem so konfiguriert ist, dass der Monitor automatisch ausgeschaltet wird, wenn der Blinkerhebel (5) des Fahrzeugs in die Neutralstellung oder in die Betätigungsstellung des fahrerseitigen Blinkers gebracht wird.

7. Video-Rückfahrsystem nach einem der Ansprüche 1 bis 5, **dadurch gekennzeichnet, dass** es ferner eine Fahrerseiten-Sichtkamera umfasst, die mit dem Monitor verbunden ist und in der Lage ist, eine Ansicht der fahrerseitigen rückwärtigen Umgebung des Fahrzeugs zu erfassen, wobei das System so konfiguriert ist, dass der Monitor automatisch eingeschaltet wird und die von der Fahrerseiten-Sichtkamera erfasste Ansicht anzeigt, wenn der Fahrtrichtungsanzeiger-Steuerhebel des Fahrzeugs in seine fahrerseitige Fahrtrichtungsanzeiger-Betätigungsposition gebracht wird, und der Monitor automatisch ausgeschaltet wird, wenn derselbe Hebel in die Neutralposition gebracht wird.

8. Video-Rückfahrsystem nach einem der Ansprüche 1 bis 6, **dadurch gekennzeichnet, dass** es so konfiguriert ist, dass ein kontinuierliches Drücken der Taste (6) für eine Dauer, die länger als ein Schwellenwert ist, automatisch das Ausschalten des Monitors (50) bewirkt.

9. Video-Rückblicksystem nach Anspruch 8, **dadurch gekennzeichnet, dass** der Schwellenwert zwischen 2 und 3 Sekunden liegt.

10. Video-Rückblicksystem nach einem der Ansprüche 1 bis 9, **dadurch gekennzeichnet, dass** es ein Verarbeitungsmodul (51) umfasst, das in der Lage ist, bestimmte Transformationen auf die von den genannten Kameras (20, 30, 40) erfassten Ansichten anzuwenden, so dass diese das Aussehen von Reflexionen von optischen Spiegeln imitieren.

11. Kraftfahrzeug mit einem Videorückblicksystem nach einem der Ansprüche 1 bis 10.

## Claims

1. A rear view video system for a motor vehicle comprising a passenger side vision camera (20) capable of capturing a view of the rear passenger side environment of said vehicle, and a monitor (50) located in the passenger compartment of said vehicle and connected to said camera (20), said system being configured so that said monitor (50) is automatically switched on and displays the view captured by said passenger side vision camera (20) when the control lever of the direction indicators (5) is switched on, said system being configured such that said monitor (50) is automatically turned on and displays the view captured by said passenger side side vision camera (20) when the direction indicator light control lever (5) of said vehicle is moved to its passenger side direction indicator light operating position;
further comprising at least one rear vision camera (30, 40) also connected to said monitor (50) and able to capture at least one view of the rear environment of said vehicle, **characterised in that** said system is configured so that, from the switched-on configuration of said monitor (50) successive presses of a button (6), provided at the end of said lever (5), cause the view displayed on said monitor (50) to be changed cyclically among those capable of being captured by said cameras (20, 30, 40).

2. The rear view video system according to claim 1, **characterized in that** it comprises a single rear view camera pivotally mounted movable between a first rear view position in which it is adapted to capture a view of the near rear environment of said vehicle, and a second rear monitoring position where it is adapted to capture a view of the more distant rear environment of said vehicle.

3. The rear view video system of claim 1, **characterised in that** it comprises a single rear view camera adapted to capture a general view of the rear environment of said vehicle, a first view of the near rear environment of said vehicle and a second view of the further rear environment of said vehicle being obtained from the general view of the rear environment of said vehicle, image processing being applied to the general view to obtain at least one of the views.

4. A video rear view system according to claim 1, **characterised in that** it comprises two separate rear vision cameras (30, 40) and capable of capturing respectively a view of the close rear environment of said vehicle and a view of the more distant rear environment of said vehicle.

5. A rear view video system according to any of claims 2 or 3, **characterized in that** said monitor (50) is connected to the gearbox control lever (7) of said vehicle, said system being configured such that said monitor (50) is automatically switched on and displays the view of the near rear environment of said vehicle when said gearbox control lever (7) is moved into the reverse position.

6. The rear view video system according to any one of claims 1 to 4, **characterized in that** it is also configured so that said monitor is automatically turned off when said direction indicator light control lever (5) of said vehicle is brought to the neutral position or to the driver's side direction indicator light actuation position.

7. A video rear view system according to any one of claims 1 to 5, **characterized in that** it further comprises a driver's side vision camera connected to said monitor and capable of capturing a view of the driver's side rear environment of said vehicle, said system being configured so that said monitor is automatically turned on and displays the view captured by said driver's side vision camera when said direction indicator light control lever of said vehicle is brought to its driver's side direction indicator light actuation position, and said monitor is automatically turned off when the same lever is brought to the neutral position.

8. The video rear view system according to any one of claims 1 to 6, **characterized in that** it is configured so that a continuous pressing of said button (6) for a duration longer than a threshold value automatically causes said monitor (50) to be turned off.

9. The video monitoring system according to claim 8, **characterised in that** said threshold value is comprised between 2 and 3 seconds.

10. Video rear-view system according to one of claims 1 to 9, **characterised in that** it comprises a processing module (51) capable of applying certain transformations to the views captured by the said cameras (20, 30, 40) so that the latter imitate the appearance of reflections from optical mirrors.

11. A motor vehicle comprising a video rear view system according to any of claims 1 to 10.
